# EUROPÄISCHE PATENTSCHRIFT

(11) **EP 4 342 644 B1**
(45) Veröffentlichungstag und Bekanntmachung des Hinweises auf die Patenterteilung: **15.10.2025**
(21) Anmeldenummer: 23188274.7
(22) Anmeldetag: 28.07.2023
(51) Int. Cl.: B25J 15/06, B25J 19/02

(54) **SAUGGREIFEREINRICHTUNG MIT VERSCHLEISSÜBERWACHUNGSEINRICHTUNG**
SUCTION GRIPPER WITH WEAR MONITORING DEVICE
DISPOSITIF DE PRÉHENSION PAR ASPIRATION AVEC DISPOSITIF DE SURVEILLANCE DE L'USURE

(30) Priorität: 26.09.2022 DE 102022124638
(43) Veröffentlichungstag der Anmeldung: 27.03.2024
(73) Patentinhaber: J. Schmalz GmbH, 72293 Glatten (DE)
(72) Erfinder: Schaaf, Dr. Walter, 72250 Freudenstadt-Grüntal (DE); Eisele, Thomas, 72275 Alpirsbach-Peterzell (DE)
(74) Vertreter: DREISS Patentanwälte PartG mbB

(56) Entgegenhaltungen:
- EP-A1- 4 049 812
- EP-B1- 1 826 160
- WO-A1-2012/034716

## Beschreibung

Die Erfindung betrifft eine Sauggreifereinrichtung mit einem Saugkörper und mit einer Verschleißüberwachungseinrichtung zur Überwachung eines Verschleißzustandes des Saugkörpers.

Sauggreifereinrichtungen dienen zum Greifen von Gegenständen mittels Unterdruck und finden beispielsweise als Endeffektoren in Unterdruckhandhabungsanlagen Verwendung. Sie umfassen üblicherweise wenigstens einen Saugkörper, der einen Sauginnenraum begrenzt und einen Anlageabschnitt bzw. Dichtlippe zur Anlage an einen zu greifenden Gegenstand aufweist. Um einen Gegenstand zu greifen, wird der Saugkörper mit dem Anlageabschnitt an den zu greifenden Gegenstand angesetzt und dann der Sauginnenraum des Saugkörpers mit Unterdruck beaufschlagt. Zum Ablegen des Gegenstands wird der Sauginnenraum dann wieder belüftet.

Es sind Sauggreifer mit unterschiedlich ausgebildeten Saugkörpern bekannt. Beispielsweise sind Elastomersauger bekannt, bei denen der Saugkörper aus einem Elastomermaterial besteht, welches sich beim Ansaugen an eine Außenfläche des zu greifenden Gegenstands dichtend anschmiegt. Außerdem sind Sauggreifer bekannt, bei denen der Saugkörper aus einem porösen Schaummaterial besteht, durch welches ein zu greifender Gegenstand angesaugt werden kann.

Bei bestimmungsgemäßem Gebrauch eines solchen Saugkörpers, also insbesondere bei wiederholtem Ansaugen und Ablegen eines Gegenstands, kommt es in der Regel zu gebrauchsbedingtem Verschleiß des Saugkörpers, insbesondere durch mechanischen Abrieb im Bereich des Anlageabschnittes. Ein solcher gebrauchsbedingter Verschleiß kann beispielsweise dazu führen, dass eine Dichtwirkung des Saugkörpers beeinträchtigt wird und somit ein Gegenstand nicht mehr mit der gewünschten Zuverlässigkeit gegriffen werden kann. Daher ist es wichtig, einen Verschleißzustand des Saugkörpers überwachen zu können.

Zu diesem Zweck ist es beispielsweise aus EP 1 816 094 B1 bekannt, den Saugkörper zumindest abschnittsweise mit einem Element auszustatten, dessen Farbe sich im Laufe der Zeit ändert und auf diese Weise einen Verschleißzustand des Saugkörpers repräsentiert.

Aus der EP 1 826 160 B1 ist zudem bekannt, einen Verschleißzustand eines Saugkörpers akustisch zu überwachen. Konkret wird vorgeschlagen, im Saugkörper eine Lichtschranke vorzusehen, welche durch Verschleiß eines im Bereich der Dichtlippe angeordneten Elements freigelegt wird und sodann über einen Lautsprecher einen Alarm auslöst.

Aus der EP 4 0 49 812 A1 ist zudem bekannt, einen Verschleißzustand eines Saugkörpers mit einem Näherungssensor zu überwachen, wobei der Näherungssensor mehrere Sensoreinheiten umfasst, welche die Anwesenheit von Saugkörpermaterial überwachen.

Aus der WO 2012/034716 A1 ist ein weiterer Sauggreifer bekannt, bei dem ein Verschleißgrad mittels elektrischer Messungen überwacht wird.

Der Erfindung liegt die Aufgabe zugrunde, bei einer Sauggreifereinrichtung einen Verschleißzustand des Saugkörpers mit einfachen Mitteln zuverlässig bestimmen zu können.

Diese Aufgabe wird durch eine Sauggreifereinrichtung mit den Merkmalen des Anspruchs 1 gelöst.

Die Sauggreifereinrichtung umfasst wenigstens einen Saugkörper zum Ansaugen eines Gegenstands. Insbesondere kann es sich bei dem Saugkörper um einen Elastomersauger oder um ein poröses Schaummaterial handeln. Der Saugkörper kann insbesondere Teil eines übergeordneten Sauggreifers sein, beispielsweise eines Flächensauggreifers. Der Saugkörper unterliegt im Zuge seines bestimmungsgemäßen Gebrauchs, also insbesondere bei wiederholtem Ansaugen und Ablegen eines Gegenstands, zumindest abschnittsweise einem gebrauchsbedingten Verschleiß. Insbesondere unterliegt der Saugkörper einem mechanischen Abrieb. Der gebrauchsbedingte Verschleiß tritt insbesondere in einem Anlageabschnitt oder Dichtlippe des Saugkörpers auf, mittels dessen der Saugkörper an einen anzusaugenden Gegenstand angelegt wird.

Die Sauggreifereinrichtung umfasst außerdem eine Verschleißüberwachungseinrichtung zur Überwachung eines Verschleißzustandes, insbesondere eines Verschleißgrades, des Saugkörpers. Insbesondere kann die Verschleißüberwachungseinrichtung dazu ausgebildet sein, um zu detektieren, dass ein vorgegebener Verschleißgrad, insbesondere ein vorgegebener Materialabrieb, des Sauggreifers erreicht ist.

Die Verschleißüberwachungseinrichtung umfasst eine lichtdurchlässige Prüfstruktur, welche einen Lichteintrittsbereich, insbesondere eine Lichteintrittsfläche, und einen Lichtaustrittsbereich, insbesondere eine Lichtaustrittsfläche, aufweist. Die Prüfstruktur ist insbesondere derart ausgebildet, dass ein durch den Lichteintrittsbereich in die Prüfstruktur eindringendes Licht zu dem Lichtaustrittsbereich geleitet wird.

Die Prüfstruktur kann derart an dem Saugkörper vorgesehen sein, dass bei Erreichen eines vorgegebenen Verschleißgrades, insbesondere bei Überschreiten einer vorgegebenen Abriebmenge, des Saugkörpers eine Lichtleitungseigenschaft und/oder eine Lichtreflexionseigenschaft der Prüfstruktur verändert wird, insbesondere derart, dass eine Lichtintensität und/oder eine Ausbreitungsrichtung von aus dem Lichtaustrittsbereich austretenden Licht verändert wird. In vorteilhafter Weise kann die Prüfstruktur derart ausgebildet sein, dass sich eine Lichtleitungseigenschaft und/oder Lichtreflexionseigenschaft im Zuge eines fortschreitenden Verschleißes des Saugkörpers kontinuierlich verändert, was eine engmaschige, insbesondere stufenlose, Überwachung eines Verschleißzustandes ermöglicht.

Alternativ oder zusätzlich kann die Prüfstruktur auch derart an dem Saugkörper vorgesehen sein, dass der Lichtaustrittsbereich oder der Lichteintrittsbereich bei Erreichen eines vorgegebenen Verschleißgrades, insbesondere bei Überschreiten einer vorgegebenen Abriebmenge, des Saugkörpers überhaupt erst zumindest abschnittsweise freigelegt wird, sodass Licht aus dem Lichtaustrittsbereich zu einer Umgebung des Saugkörpers überhaupt erst austreten kann bzw. Licht durch den Lichteintrittsbereich überhaupt erst in die Prüfstruktur eindringen kann. Insbesondere kann der Lichtaustrittsbereich in einem Neuzustand der Sauggreifereinrichtung abgedeckt bzw. verschlossen sein, bspw. durch eine Deckschicht oder durch Saugkörpermaterial, sodass durch den Lichteintrittsbereich in die Prüfstruktur eingestrahltes Licht nicht aus dem Lichtaustrittsbereich austreten kann. Es ist auch denkbar, dass der Lichteintrittsbereich in einem Neuzustand der Sauggreifereinrichtung abgedeckt bzw. verschlossen ist, sodass Licht nicht durch den Lichteintrittsbereich in die Prüfstruktur eindringen kann. Der Lichteintrittsbereich oder der Lichtaustrittsbereich können insofern einen lichtundurchlässigen Zustand (im Neuzustand der Sauggreifereinrichtung) aufweisen, welcher bei Erreichen eines vorgegebenen Verschleißgrades des Saugkörpers in einen lichtdurchlässigen Zustand überführt wird. Es ist auch denkbar, dass die Prüfstruktur derart ausgebildet ist, dass der Lichtaustrittsbereich oder der Lichteintrittsbereich bei Erreichen des vorgegebenen Verschleißgrades des Saugkörpers zunächst überhaupt erst freigelegt wird und dann bei fortschreitendem Verschleiß des Saugkörpers eine Größe oder Geometrie des Lichtaustrittsbereichs oder des Lichteintrittsbereichs verändert wird oder aber nicht mehr weiter verändert wird.

Eine solche Sauggreifereinrichtung ermöglicht es, einen Verschleißzustand des Saugkörpers mit einfachen Mitteln zuverlässig und automatisiert zu überwachen. Die Verschleißdetektion basiert auf dem Grundprinzip, dass infolge eines gebrauchsbedingten Verschleißes, insbesondere bei Erreichen eines vorgegebenen Verschleißgrades, eine Intensität und/oder Ausbreitungsrichtung von aus der Prüfstruktur austretendem Licht verändert wird, und zwar entweder indem eine Lichtleitungseigenschaft der Prüfstruktur in Folge des Verschleißes verändert wird oder indem der Lichtaustrittsbereich der Prüfstruktur überhaupt erst freigelegt wird und somit Licht überhaupt erst aus dem Lichtaustrittsbereich austreten kann. Eine solche lokale Lichtintensitätsänderung im Lichtaustrittsbereich der Prüfstruktur kann dann detektiert werden und auf diese Weise der Saugkörper hinsichtlich seines Verschleißzustands überwacht werden. Die Prüfstruktur ist insofern insbesondere derart ausgebildet, dass das Erreichen einer vorgegebenen Verschleißgrades des Saugkörpers als Veränderung einer Intensität oder Ausbreitungsrichtung von aus dem Lichtaustrittsbereich der Prüfstruktur austretenden Licht detektierbar ist. Bei dem vorgegebenen Verschleißgrad kann es sich insbesondere um einen Grenz-Verschleißgrad des Saugkörpers handeln, bei Erreichen dessen der Saugkörper unmittelbar oder zumindest in naher Zukunft (beispielsweise spätestens nach weiteren 100 Greifzyklen) ausgetauscht werden muss.

Erfindungsgemäß umfasst die Verschleißüberwachungseinrichtung eine optische Detektionseinrichtung, welche dazu eingerichtet ist, aus dem Lichtaustrittsbereich der Prüfstruktur austretendes Licht zu detektieren. Insbesondere kann die optische Detektionseinrichtung dazu ausgebildet sein, eine lokale Lichtintensitätsänderung am Lichtaustrittsbereich der Prüfstruktur (z.B. in Folge einer Veränderung einer Lichtleitungseigenschaft der Prüfstruktur oder dem zumindest abschnittsweisen Freilegen des Lichteintrittsbereichs oder des Lichtaustrittsbereichs) zu detektieren. Die optische Detektionseinrichtung kann beispielsweise einen Lichtintensitätssensor und/oder eine Kamera umfassen. Die optische Detektionseinrichtung ist vorzugsweise derart angeordnet, dass sie die Prüfstruktur, insbesondere den Lichtaustrittsbereich der Prüfstruktur, erfassen kann.

Die Prüfstruktur ist in den Saugkörper integriert. Der Saugkörper umfasst eine Saugkörperwandung, welche einen Sauginnenraum begrenzt. Die Prüfstruktur ist in der Saugkörperwandung ausgebildet.

Die Prüfstruktur kann derart in den Saugkörper integriert bzw. in das Saugkörpermaterial eingebettet sein, dass der Lichtaustrittsbereich oder der Lichteintrittsbereich der Prüfstruktur in einem (unverschlissenen) Neuzustand des Saugkörpers durch Saugkörpermaterial abgedeckt ist und insbesondere erst bei Erreichen eines vorgegebenen Verschleißgrades, insbesondere bei Überschreiten einer vorgegebenen Abriebmenge, des Saugkörpers freigelegt wird. Insofern kann die Prüfstruktur derart in den Saugkörper integriert sein, dass der Lichtaustrittsbereich oder der Lichteintrittsbereich in einem Neuzustand des Saugkörpers von einer Anlagefläche oder Dichtlippe des Saugkörpers zur Anlage an einen zu greifenden Gegenstand beabstandet angeordnet ist. Eine solche Ausgestaltung ermöglicht eine besonders direkte und somit präzise Überwachung des Verschleißzustandes des Sauggreifers.

Es ist auch denkbar, dass die Prüfstruktur derart ausgebildet und angeordnet ist, dass der Lichtaustrittsbereich oder der Lichteintrittsbereich in einem Neuzustand der Sauggreifvorrichtung durch eine im Zuge des gebrauchsbedingten Verschleißes des Saugkörpers selbst verschleißende Verschleißschicht abgedeckt ist. In vorteilhafter Weise kann die Verschleißschicht aus dem gleichen Material bestehen, aus dem auch der Saugkörper besteht. Saugkörper und Verschleißschicht weisen dann insbesondere den gleichen Abriebwiderstand auf. Die Verschleißschicht kann lichtundurchlässig sein. Vorzugsweise ist eine Dicke der Verschleißschicht derart bemessen, dass die Verschleißschicht erst dann abgerieben ist, wenn der Saugkörper den vorgegebenen Verschleißgrad erreicht hat.

Erfindungsgemäß ist die Prüfstruktur durch einen lichtdurchlässigen Kanal gebildet. Der lichtdurchlässige Kanal kann insbesondere ein erstes Kanalende aufweisen, welches den Lichteintrittsbereich bereitstellt, und ein zweites Kanalende, welches den Lichtaustrittsbereich bereitstellt. Insofern ist es denkbar, dass das erste oder das zweite Kanalende in einem Neuzustand der Sauggreifereinrichtung zunächst verschlossen ist und erst bei Erreichen eines vorgegebenen Verschleißgrades, insbesondere bei Überschreiten einer vorgegebenen Abriebmenge, des Saugkörpers geöffnet wird. Es ist auch denkbar, dass beide Kanalenden bereits im Neuzustand der Sauggreifereinrichtung geöffnet sind, sich allerdings eine Geometrie des ersten oder zweiten Kanalendes oder eines Kanalabschnitts zwischen erstem und zweitem Kanalende im Zuge eines Verschleißes verändert.

Erfindungsgemäß ist der lichtdurchlässige Kanal durch eine lokale Aussparung in einer Saugkörperwandung des Saugkörpers gebildet. Eine solche Ausgestaltung ist besonders einfach und kostengünstig herstellbar, da eine Anzahl an Einzelbauteilen reduziert ist. Zudem ist eine solche Ausgestaltung besonders robust in der Anwendung. Es ist denkbar, dass die lokale Aussparung bereits beim Urformen des Saugkörpers vorgesehen wird. Es ist auch denkbar, dass die lokale Aussparung erst nachträglich hinzugefügt wird, bspw. durch Bohren oder Stanzen. Die lokale Aussparung kann derart in dem Saugkörper ausgebildet sein, dass der dadurch bereitgestellte lichtdurchlässige Kanal im Neuzustand des Saugkörpers an einem Kanalende von Saugkörpermaterial verschlossen ist und insbesondere erst bei Erreichen eines vorgegebenen Verschleißgrades, insbesondere bei Überschreiten einer vorgegebenen Abriebmenge, des Saugkörpers dieses Kanalende geöffnet wird.

Im Rahmen einer weiteren Ausgestaltung kann die lokale Aussparung derart angeordnet sein, dass bei Erreichen eines vorgegebenen Verschleißgrades, insbesondere Überschreiten einer vorgegebenen Abriebmenge, des Saugkörpers ein weiterer, (sekundäre) Lichtaustrittsbereich entlang eines optischen Weges von dem Lichteintrittsbereich zu dem (primären) Lichtaustrittsbereich freigelegt wird. Bei einer solchen Ausgestaltung wird durch das Freilegen des weiteren (sekundären) Lichtaustrittsbereichs insbesondere eine Lichtleitungseigenschaft und/oder eine Lichtreflexionseigenschaft der Prüfstruktur verändert, sodass eine Intensität des an dem (primären) Lichtaustrittsbereich ankommenden und aus diesem austretendes Lichts verändert wird. Insbesondere ist es denkbar, dass infolge des Freilegens des weiteren (sekundären) Lichtaustrittsbereichs Licht, welches durch den Lichteintrittsbereich in die Prüfstruktur eingestrahlt wird, anteilig oder vollständig durch den weiteren (sekundären) Lichtaustrittsbereich austritt, sodass die Intensität des an dem (primären) Lichtaustrittsbereich austretenden Lichts abnimmt. Eine solche Lichtintensitätsänderung kann dann von der Detektionseinrichtung detektiert somit das Erreichen eines vorgegebenen Verschleißgrades überwacht werden. Bei einer solchen Ausgestaltung können der Lichteintrittsbereich und der (primäre) Lichtaustrittsbereich bereits in einem Neuzustand des Saugkörpers offen sein, sodass Licht, welches durch den Lichteintrittsbereich in die Prüfstruktur eindringt, bereits im Neuzustand durch zu dem (primären) Lichtaustrittsbereich geleitet wird und aus diesem austritt. Die lokale Aussparung kann dann bspw. derart in dem Saugkörper ausgebildet sein, dass beide Kanalenden geöffnet sind, und bei Erreichen eines vorgegebenen Verschleißgrades, insbesondere bei Überschreiten einer vorgegebenen Abriebmenge, des Saugkörpers eine weitere Kanalöffnung entlang des optischen Weges zwischen erstem Kanalende und zweitem Kanalende geöffnet wird.

Im Rahmen einer vorteilhaften Weiterbildung können der Lichteintrittsbereich, beispielsweise ein erstes Kanalende der als lichtdurchlässiger Kanal ausgebildeten Prüfstruktur, und der Lichtaustrittsbereich, beispielsweise ein zweites Kanalende der als lichtdurchlässiger Kanal ausgebildeten Prüfstruktur, auf der gleichen Seite des Saugkörpers ausmünden. Beispielsweise ist es denkbar, dass die Prüfstruktur bzw. der lichtdurchlässige Kanal U-förmig ausgebildet ist. Vorzugsweise ist die Prüfstruktur dann durch ein Lichtleitelement bereitgestellt.

In vorteilhafter Weise kann der Saugkörper eine Ansaugseite zum Ansaugen des Gegenstands und eine, insbesondere gegenüberliegende, Anschlussseite zum Anschluss an eine Unterdruckversorgung aufweisen. Dann kann es vorteilhaft sein, wenn die Prüfstruktur derart ausgebildet ist, dass der Lichteintrittsbereich und der Lichtaustrittsbereich (bzw. ein erstes und ein zweites Kanalende des lichtdurchlässigen Kanals) in die Anschlussseite des Saugkörpers ausmünden. Dies ermöglicht es auf einfache Weise während eines Betriebs der Sauggreifereinrichtung, insbesondere auch bei gegriffenem Gegenstand, einen Verschleißzustand des Saugkörpers zu überwachen.

Erfindungsgemäß weist die Verschleißüberwachungseinrichtung eine Lichtquelle zur Aussendung eines Prüflichtstrahls auf. Die Lichtquelle ist derart angeordnet, dass der Prüflichtstrahl durch den Lichteintrittsbereich in die Prüfstruktur eintreten kann. Eine Ausgestaltung mit Lichtquelle ermöglicht eine besonders zuverlässige und von Umgebungseinflüssen unabhängige Überwachung des Verschleißzustandes. Insbesondere kann die Detektionseinrichtung auf die Lichtquelle, bspw. eine Wellenlänge des Prüflichtstrahls, abgestimmt sein. Die Lichtquelle kann bspw. eine Lampe, eine LED, oder eine Laserlichtquelle sein.

Im Rahmen einer besonders kompakten Ausgestaltung können die Detektionseinrichtung und/oder die Lichtquelle am Saugkörper befestigt sein. Bei der vorstehend beschriebenen Ausgestaltung, bei welcher der Lichteintrittsbereich und der Lichtaustrittsbereich in eine Anschlussseite des Saugkörpers ausmünden, können die Lichtquelle und die Detektionseinrichtung vorzugsweise beide an der Anschlussseite des Saugkörpers vorgesehen sein, sodass die Anlageseite frei zur Anlage an einen Gegenstand ist.

Die Sauggreifereinrichtung kann außerdem eine Steuereinrichtung zur Ansteuerung der Lichtquelle und/oder der Detektionseinrichtung umfassen.

Unabhängig von der Ausgestaltung der Prüfstruktur oder der Detektionseinrichtung kann die Verschleißüberwachungseinrichtung außerdem eine mit der Detektionseinrichtung zusammenwirkende Auswerteeinrichtung umfassen. Die Auswerteeinrichtung kann Teil der Steuereinrichtung sein. Insbesondere kann die Auswerteeinrichtung eine Datenverarbeitungsanlage umfassen. Die Auswerteeinrichtung kann insbesondere dazu eingerichtet sein, um in Abhängigkeit eines von der Detektionseinrichtung detektierten optischen Signals ein Verschleißsignal zu erzeugen, welches den Verschleißzustand des Saugkörpers repräsentiert. Dies ermöglicht es, auf einfache Weise automatisiert einen Verschleißzustand des Saugkörpers zu ermitteln. Die Auswerteeinrichtung kann von dem Sauggreifer separat bereitgestellt sein. Beispielsweise ist es denkbar, dass die Auswerteeinrichtung Teil eines Cloud-Computersystems ist. Dann kann die Detektionseinrichtung über eine Kommunikationsschnittstelle, z.B. eine WLAN- oder LAN-Schnittstelle, verfügen, über welche Messsignale an die Auswerteeinrichtung übermittelt werden können. Es ist aber auch möglich, dass die Auswerteeinrichtung an dem Sauggreifer selbst angeordnet ist. Die Auswerteeinrichtung kann beispielsweise eine Anzeigeeinrichtung umfassen, welche einen Verschleißzustand des Saugkörpers visualisiert.

In vorteilhafter Weise kann die Auswerteeinrichtung dazu eingerichtet sein, zum Erzeugen des Verschleißsignals ein von der Detektionseinrichtung empfangenes Messsignal mit einem in einer Speichereinrichtung der Auswerteeinrichtung hinterlegten Referenzmesssignal zu vergleichen. Insbesondere kann das Verschleißsignal dann einen betriebsgeeigneten Verschleißzustand des Saugkörpers repräsentieren, wenn das Messsignal einen vorgegebenen, insbesondere in der Speichereinrichtung der Auswerteeinrichtung hinterlegten oder hinterlegbaren, Schwellwert überschreitet. Das Verschleißsignal kann insbesondere dann einen betriebsungeeigneten Verschleißzustand des Sauggreifers repräsentieren, wenn das Messsignal den Schwellwert unterschreitet.

Im Zuge eines bestimmungsgemäßen Gebrauchs der Sauggreifereinrichtung kann es vorkommen, dass der Saugkörper an einer bestimmten Stelle besonders starkem Verschleiß unterliegt, bspw. wenn der Saugkörper immer mit einer gleichen Kante an einen Gegenstand angreift. Um lokale Verschleißunterschiede detektieren zu können, kann es daher im Rahmen eines allgemeinen Aspekts vorteilhaft sein, wenn mehrere Prüfstrukturen vorgesehen sind. Die Prüfstrukturen können dann beispielsweise über einen Umfang des Saugkörpers, welches Weise gleichmäßig, verteilt angeordnet sein. Es ist denkbar, dass nur eine Detektionseinrichtung vorgesehen ist, welche alle Prüfstrukturen überwacht. Es ist auch denkbar, dass für jede der Mehrzahl an Prüfstrukturen eine eigene Detektionseinrichtung vorgesehen ist.

Die Erfindung wird im Folgenden anhand der Figuren näher erläutert. Es zeigen:
- Figur 1: schematische Darstellung einer Ausgestaltung einer Sauggreifereinrichtung in einem Neuzustand in einer teilweisen Schnittansicht;
- Figur 2: schematische Darstellung der Sauggreifereinrichtung gemäß Fig. 1 mit bereits teilweise verschlissenem Saugkörper;
- Figur 3: schematische Darstellung einer weiteren Ausgestaltung einer Sauggreifereinrichtung in einem Neuzustand in einer teilweisen Schnittansicht;
- Figur 4: schematische Darstellung einer weiteren Ausgestaltung einer Sauggreifereinrichtung in einem Neuzustand in einer teilweisen Schnittansicht;
- Figur 5: schematische Darstellung einer weiteren Ausgestaltung einer Sauggreifereinrichtung in einem Neuzustand in einer teilweisen Schnittansicht; und
- Figur 6: schematische Darstellung der Sauggreifereinrichtung gemäß Fig. 5 mit bereits teilweise verschlissenem Saugkörper.

In der nachfolgenden Beschreibung sowie in den Figuren sind für identische oder einander entsprechende Merkmale jeweils dieselben Bezugszeichen verwendet.

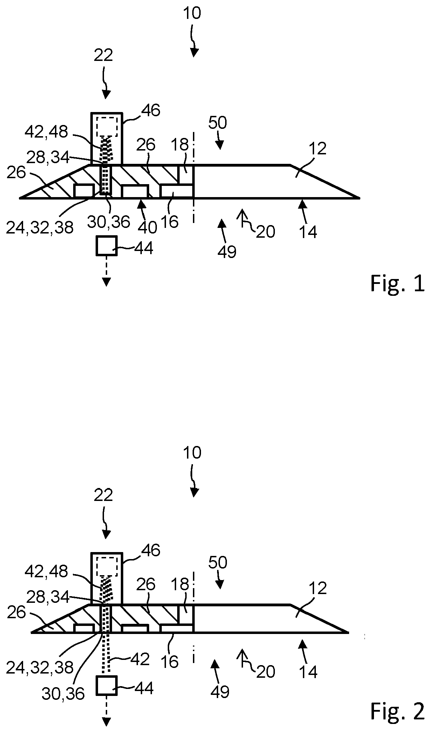

Die Figur 1 zeigt eine erste Ausgestaltung einer Sauggreifereinrichtung, welche insgesamt mit dem Bezugszeichen 10 bezeichnet ist. Die Sauggreifereinrichtung 10 umfasst einen Saugkörper 12, welcher in dem dargestellten Beispiel als Elastomersauger ausgebildet ist. Bei nicht dargestellten Ausgestaltungen kann es sich bei dem Saugkörper 12 beispielsweise auch um ein poröses Schaummaterial handeln.

Der Saugkörper 12 dient zum Ansaugen und somit zum Greifen eines Gegenstandes (nicht dargestellt). Bei bestimmungsgemäßem Gebrauch wird der Saugkörper 12 hierzu mit einem Anlageabschnitt 14 bzw. Dichtlippe 14 an eine Außenfläche des zu greifenden Gegenstands aufgesetzt und der Gegenstand dann mittels Unterdruck angesaugt. Zu diesem Zweck umfasst der Saugkörper 12 mehrere Unterdruckkanäle 16, welche über einen Unterdruckanschluss 18 mit Unterdruck versorgbar sind. Beispielsweise kann der Unterdruckanschluss 18 mit einer Unterdruckerzeugungsvorrichtung (nicht dargestellt) verbunden sein. Zum Ablegen eines angesaugten Gegenstands können dann die Unterdruckkanäle 16 wieder belüftet werden, beispielsweise über den Anschluss 18.

Im Zuge dieses bestimmungsgemäßen Gebrauchs, also bei wiederholtem Ansaugen und Ablegen eines Gegenstands, unterliegt der Saugkörper 12 zumindest abschnittsweise einem gebrauchsbedingten Verschleiß, insbesondere im Bereich des Anlageabschnitts 14. Dies ist in den Figuren 1 und 2 schematisch verdeutlicht, welche die Sauggreifereinrichtung 10 in einem Neuzustand (vgl. Fig. 1) und einem gebrauchten Zustand des Saugkörpers 12 (vgl. Fig. 2) zeigen. Eine Hauptverschleißrichtung ist in den Figuren durch den mit Bezugszeichen 20 bezeichneten Pfeil angedeutet. Bei dem Verschleiß handelt es sich insbesondere um mechanischen Abrieb des Saugkörpermaterials, bspw. infolge von Reibung zwischen dem Saugkörper 12 und dem angesaugten Gegenstand.

Um einen Verschleißzustand des Saugkörpers 12 überwachen zu können, umfasst die Sauggreifereinrichtung 10 eine Verschleißüberwachungseinrichtung 22. Die Verschleißüberwachungseinrichtung 22 umfasst eine lichtdurchlässige Prüfstruktur 24, welche in dem dargestellten Beispiel in ein Saugkörpermaterial 26 des Saugkörpers 12 integriert ist.

Die Prüfstruktur 24 weist einen Lichteintrittsbereich 28 und einen Lichtaustrittsbereich 30 auf. Im Beispiel ist die Prüfstruktur als lichtdurchlässiger Kanal 32 ausgebildet, wobei ein erstes Kanalende 34 den Lichteintrittsbereich 28 bereitstellt und ein zweites Kanalende 36 den Lichtaustrittsbereich 30 bereitstellt.

In dem dargestellten Beispiel ist die Prüfstruktur 24, bzw. der lichtdurchlässige Kanal 32 durch eine lokale Aussparung 38 in dem Saugkörpermaterial 26 gebildet.

Wie aus Figur 1 ersichtlich, ist die Prüfstruktur 24 bzw. der lichtdurchlässige Kanal 32 derart ausgebildet, dass der Lichteintrittsbereich 28 (erstes Kanalende 34) zu einer Umgebung des Saugkörpers 12 hin offen ist. Der Lichtaustrittsbereich 30 (zweites Kanalende 36) ist hingegen in dem in Figur 1 dargestellten Neuzustand der Sauggreifereinrichtung 10 von Saugkörpermaterial 26 abgedeckt. Der Lichtaustrittsbereich 30 bzw. das zweite Kanalende 36 sind insofern im Neuzustand von einer Anlagefläche 40 des Anlageabschnitts 14 beabstandet angeordnet. Dies hat zur Folge, dass Licht 42, welches durch den Lichteintrittsbereich 28 in die Prüfstruktur 24 eingestrahlt wird, den Lichtaustrittsbereich 30 im Neuzustand des Saugkörpers 12 nicht verlassen kann (vgl. Fig. 1).

Bei Erreichen eines vorgegebenen Verschleißgrades des Saugkörpers 12, also dann, wenn bereits eine gewisse Materialmenge des Saugkörpers 12 abgerieben ist, wird das zweite Kanalende 36 zumindest abschnittsweise geöffnet, also der Lichtaustrittsbereich 30 zumindest abschnittsweise freigelegt. Infolgedessen kann durch den Lichteintrittsbereich 28 in die Prüfstruktur 24 eintretendes Licht 42 aus dem Lichtaustrittsbereich 30 austreten, was dann als lokale Lichtintensitätsänderung detektiert werden kann.

Zu diesem Zweck umfasst die Sauggreifereinrichtung 10 eine Detektionseinrichtung 44, welche dazu ausgebildet ist, aus dem Lichtaustrittsbereich 30 austretendes Licht, insbesondere dessen Intensität, zu detektieren und somit einen Verschleißzustand des Saugkörpers 12 zu überwachen. Die Detektionseinrichtung 44 kann beispielsweise einen Lichtintensitätssensor oder eine Kamera umfassen.

In dem dargestellten Beispiel umfasst die Verschleißüberwachungseinrichtung 22 eine Lichtquelle 46, welche dazu ausgebildet ist, einen Prüflichtstrahl 48 durch den Lichteintrittsbereich 28 in die Prüfstruktur 24 einzuleiten. Beispielsweise kann es sich bei der Lichtquelle 46 um eine LED oder eine Laserquelle handeln.

In dem in den Figuren 1 und 2 dargestellten Beispiel ist die Prüfstruktur 24 derart angeordnet, dass der Lichteintrittsbereich 28 an einer der dem Anlageabschnitt 14 bzw. einer Ansaugseite 49 gegenüberliegenden Anschlussseite 50 des Saugkörpers 12 ausmündet. Insofern ist es vorteilhaft, wenn die Lichtquelle 46 ebenfalls an der Anschlussseite 50 angeordnet ist.

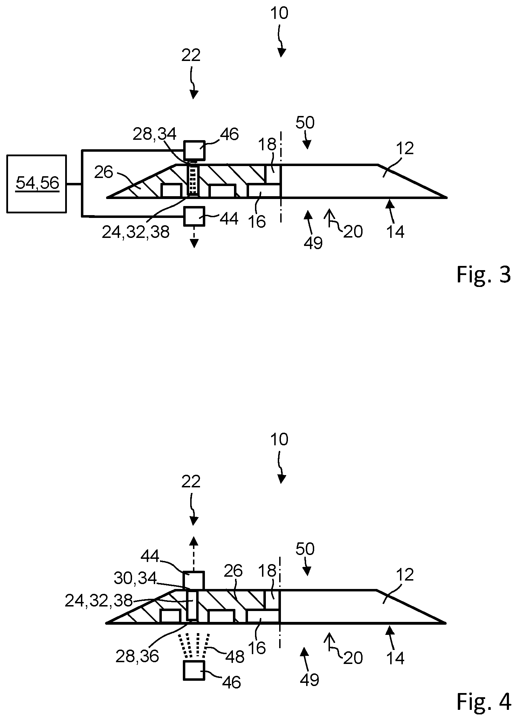

Wie in den Figuren 1 und 2 beispielhaft dargestellt, kann die Lichtquelle 46 an dem Saugkörper 12 befestigt sein. Es ist jedoch auch möglich, dass die Lichtquelle 46 von dem Saugkörper 12 beabstandet angeordnet ist (vgl. Figur 3). In diesem Fall ist es denkbar, dass die Lichtquelle 46 über eine Lichtleiteinrichtung (nicht dargestellt), z.B. eine optische Faser, mit dem Lichteintrittsbereich 28 optisch verbunden ist.

Die Figur 4 zeigt eine weitere Ausgestaltung einer Sauggreifereinrichtung 10, bei der im Vergleich zu der Ausgestaltung gemäß Fig. 1 die Lichtquelle 46 und Detektionseinrichtung 44 in ihren Positionen vertauscht sind. In diesem Fall bildet insofern das zweite Kanalende 36 des lichtdurchlässigen Kanals 32 (Prüfstruktur 24) einen Lichteintrittsbereich 28 und das erste Kanalende 34 bildet den Lichtaustrittsbereich 30. Bei dieser Ausgestaltung ist dann der Lichteintrittsbereich 28 im Neuzustand der Saugkörpers 12 von Saugkörpermaterial 26 abgedeckt. Der Lichtaustrittsbereich 30 ist hingegen zu einer Umgebung des Saugkörpers 12 bzw. zu der Detektionseinrichtung 44 hin offen. Im Übrigen entspricht die Ausgestaltung gemäß Figur 4 der Ausgestaltung gemäß den Figuren 1 und 2, sodass zur Vermeidung von Wiederholungen auf vorstehende Ausführungen verwiesen wird.

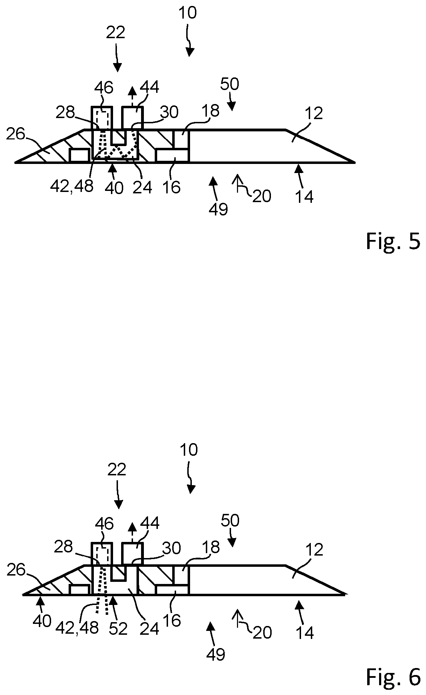

Die Figur 5 zeigt eine weitere Ausgestaltung einer Sauggreifereinrichtung 10, bei welcher der Lichteintrittsbereich 28 und der (primäre) Lichtaustrittsbereich 30 der Prüfstruktur 24 in die gleiche Seite, im Beispiel in Richtung der Anschlussseite 50, ausmünden. Durch den Lichteintrittsbereich 28 eingestrahltes Licht wird insofern im Neuzustand des Saugkörpers 12 zu dem Lichtaustrittsbereich 30 geleitet. Die Prüfstruktur 24 ist derart angeordnet, dass bei Erreichen eines vorgegebenen Verschleißgrades ein weiterer (sekundärer) Lichtaustrittsbereich 52 freigelegt, sodass durch den Lichteintrittsbereich 28 eingestrahltes Licht zu einem bestimmten Anteil oder ausschließlich durch den weiteren (sekundären) Lichtaustrittsbereich 52 austritt (vgl. Fig. 6). Infolgedessen verringert sich eine Intensität des aus dem (primären) Lichtaustrittsbereich 30 austretenden Lichts, was dann durch die Detektionseinrichtung 44 detektierbar ist.

In dem dargestellten Beispiel gemäß Fig. 5 ist die Prüfstruktur 24 U-förmig ausgebildet, wobei der mittlere Schenkel parallel zu der Anlagefläche 40 verläuft. Bei nicht dargestellten Ausgestaltungen ist es aber auch denkbar, dass Prüfstruktur 24 eine andere Geometrie einnimmt.

Unabhängig von der Ausgestaltung der Prüfstruktur 24 und der Detektionseinrichtung 44, kann die Sauggreifereinrichtung 10 außerdem eine Steuereinrichtung 54 umfassen (beispielhaft und schematisch nur für die Ausgestaltung gemäß Fig. 3 angedeutet) umfassen, welche dazu ausgebildet ist, die Lichtquelle 46 und/oder die Detektionseinrichtung 44 anzusteuern. Die Steuereinrichtung 54 kann insbesondere eine Auswerteeinrichtung 56 umfassen. Wie vorstehend erwähnt, kann die Auswerteeinrichtung 56 dazu eingerichtet sein, um in Abhängigkeit eines von der Detektionseinrichtung 44 detektierten optischen Signals ein Verschleißsignal zu erzeugen, das den Verschleißzustand des Saugkörpers 12 repräsentiert.

## Patentansprüche

1. Sauggreifereinrichtung (10), umfassend
- einen Saugkörper (12), welcher bei bestimmungsgemäßem Gebrauch zumindest abschnittsweise einem gebrauchsbedingten Verschleiß unterliegt;
- eine Verschleißüberwachungseinrichtung (22) zur Überwachung eines Verschleißzustandes des Saugkörpers (12),
**dadurch gekennzeichnet, dass**
die Verschleißüberwachungseinrichtung (22) eine lichtdurchlässige Prüfstruktur (24) mit einem Lichteintrittsbereich (28) und einem Lichtaustrittsbereich (30) umfasst,
wobei die Prüfstruktur (24) derart an dem Saugkörper (12) vorgesehen ist, dass bei Erreichen eines vorgegebenen Verschleißgrades, insbesondere bei Überschreiten einer vorgegebenen Abriebmenge, des Saugkörpers (12)
eine Lichtleitungseigenschaft der Prüfstruktur (24) verändert wird
oder
der Lichtaustrittsbereich (30) oder der Lichteintrittsbereich (28) überhaupt erst zumindest abschnittsweise freigelegt wird,
dass die Verschleißüberwachungseinrichtung (22) außerdem eine Lichtquelle (46) zur Aussendung eines Prüflichtstrahls (48) durch den Lichteintrittsbereich (28) der Prüfstruktur (24) aufweist,
dass die Verschleißüberwachungseinrichtung (22) außerdem eine optische Detektionseinrichtung (44) umfasst, welche dazu ausgebildet ist, aus dem Lichtaustrittsbereich (30) der Prüfstruktur (24) austretenden Licht zu detektieren, **dadurch gekennzeichnet,**
**dass** die Prüfstruktur (24) ein lichtdurchlässiger Kanal (32) ist, welcher durch eine lokale Aussparung (38) in einer Saugkörperwandung des Saugkörpers (12) gebildet ist.

2. Sauggreifereinrichtung (10) nach Anspruch 1, wobei die Prüfstruktur (24) derart ausgebildet und angeordnet ist, dass der Lichtaustrittsbereich (30) oder der Lichteintrittsbereich (28) in einem Neuzustand des Saugkörpers (12) durch Saugkörpermaterial (26) oder durch eine im Zuge des gebrauchsbedingten Verschleißes des Saugkörpers (12) selbst verschleißende Verschleißschicht abgedeckt ist.

3. Sauggreifereinrichtung (10) nach einem der Ansprüche 1 oder 2, wobei die Prüfstruktur (24) derart angeordnet ist, dass bei Erreichen eines vorgegebenen Verschleißgrades, insbesondere bei Überschreiten einer vorgegebenen Abriebmenge, des Saugkörpers (12) ein weiterer Lichtaustrittsbereich (52) entlang eines optischen Wegs von dem Lichteintrittsbereich (28) zu dem Lichtaustrittsbereich (30) freigelegt wird.

4. Sauggreifereinrichtung (10) nach einem der vorherigen Ansprüche, wobei der Lichteintrittsbereich (28) und der Lichtaustrittsbereich (30) auf der gleichen Seite des Saugkörpers (12) ausmünden.

5. Sauggreifereinrichtung (10) nach einem der Ansprüche 3 oder 4, wobei der Saugkörper (12) eine Ansaugseite (49) zum Ansaugen des Gegenstands und eine insbesondere gegenüberliegende Anschlussseite (50) zum Anschluss an eine Unterdruckversorgung aufweist, wobei der Lichteintrittsbereich (28) und der Lichtaustrittsbereich (30) der Prüfstruktur (24) in die Anschlussseite (50) ausmünden.

6. Sauggreifereinrichtung (10) nach einem der vorherigen Ansprüche, wobei die Detektionseinrichtung (44) und/oder die Lichtquelle (46) am Saugkörper (12) befestigt sind.

7. Sauggreifereinrichtung (10) nach einem der vorherigen Ansprüche, wobei die Verschleißüberwachungseinrichtung (22) außerdem eine mit der Detektionseinrichtung (44) zusammenwirkende Auswerteeinrichtung (56) umfasst, welche dazu eingerichtet ist, um in Abhängigkeit eines von der Detektionseinrichtung (44) detektierten optischen Signals ein Verschleißsignal zu erzeugen, das den Verschleißzustand des Saugkörpers (12) repräsentiert.

## Claims

1. Suction gripper device (10), comprising
- a suction body (12) which, when used as intended, is subjected to use-related wear, at least in portions;
- a wear monitoring device (22) for monitoring a wear state of the suction body (12),
**characterized in that**
the wear monitoring device (22) comprises a translucent test structure (24) having a light entry region (28) and a light exit region (30),
the test structure (24) being provided on the suction body (12) in such a way that when a predetermined degree of wear of the suction body (12) is reached, in particular when a predetermined amount of abrasion is exceeded,
a light conduction property of the test structure (24) is changed
or
the light exit region (30) or the light entry region (28) is only then exposed, at least in portions,
**in that** the wear monitoring device (22) also has a light source (46) for emitting a test light beam (48) through the light entry region (28) of the test structure (24),
**in that** the wear monitoring device (22) also comprises an optical detection device (44) which is designed to detect light emerging from the light exit region (30) of the test structure (24), **characterized in**
**that** the test structure (24) is a translucent channel (32) which is formed by a local recess (38) in a suction body wall of the suction body (12).

2. Suction gripper device (10) according to claim 1,
wherein the test structure (24) is designed and arranged such that the light exit region (30) or the light entry region (28) in a new state of the suction body (12) is covered by suction body material (26) or by a wear layer which wears out in the course of use-related wear of the suction body (12).

3. Suction gripper device (10) according to one of claims 1 or 2, wherein the test structure (24) is arranged such that when a predetermined degree of wear of the suction body (12) is reached, in particular when a predetermined amount of abrasion is exceeded, a further light exit region (52) is exposed along an optical path from the light entry region (28) to the light exit region (30).

4. Suction gripper device (10) according to any of the preceding claims, wherein the light entry region (28) and the light exit region (30) open out on the same side of the suction body (12).

5. Suction gripper device (10) according to one of claims 3 or 4, wherein the suction body (12) has a suction side (49) for sucking in the object and a connection side (50) in particular opposite thereto for connection to a vacuum supply, wherein the light entry region (28) and the light exit region (30) of the test structure (24) open into the connection side (50).

6. Suction gripper device (10) according to any of the preceding claims, wherein the detection device (44) and/or the light source (46) are attached to the suction body (12).

7. Suction gripper device (10) according to any of the preceding claims, wherein the wear monitoring device (22) also comprises an evaluation device (56) interacting with the detection device (44), which evaluation device is designed to generate a wear signal, which represents the wear state of the suction body (12), depending on an optical signal detected by the detection device (44).

## Revendications

1. Dispositif de préhension par aspiration (10), comprenant
- un corps d'aspiration (12) qui, lors d'une utilisation conforme, est soumis au moins dans certaines sections à une usure due à l'utilisation;
- un dispositif de surveillance d'usure (22) permettant de surveiller un état d'usure du corps d'aspiration (12),
**caractérisé en ce que**
le dispositif de surveillance d'usure (22) comprend une structure de vérification (24) laissant passer la lumière comportant une zone d'entrée de lumière (28) et une zone de sortie de lumière (30),
dans lequel la structure de vérification (24) est prévue sur le corps d'aspiration (12) de telle sorte que, lorsqu'un degré d'usure prédéfini du corps d'aspiration (12) est atteint, en particulier lorsqu'une quantité d'abrasion prédéfinie est dépassée,
une propriété de conduction de la lumière de la structure de vérification (24) est modifiée
ou
la zone de sortie de lumière (30) ou la zone d'entrée de lumière (28) n'est dégagée en général qu'au moins dans certaines sections,
**en ce que** le dispositif de surveillance d'usure (22) présente en outre une source de lumière (46) pour l'émission d'un faisceau lumineux de vérification (48) à travers la zone d'entrée de lumière (28) de la structure de vérification (24),
**en ce que** le dispositif de surveillance d'usure (22) comprend en outre un dispositif de détection (44) optique qui est configuré pour détecter la lumière sortant de la zone de sortie de lumière (30) de la structure de vérification (24), **caractérisé en ce**
**que** la structure de vérification (24) est un canal (32) laissant passer la lumière qui est formé par un évidement local (38) dans une paroi de corps d'aspiration du corps d'aspiration (12).

2. Dispositif de préhension par aspiration (10) selon la revendication 1, dans lequel la structure de vérification (24) est réalisée et disposée de telle sorte que la zone de sortie de lumière (30) ou la zone d'entrée de lumière (28) est recouverte, dans un état neuf du corps d'aspiration (12), d'un matériau de corps d'aspiration (26) ou d'une couche d'usure s'usant elle-même au cours de l'usure du corps d'aspiration (12) due à l'utilisation.

3. Dispositif de préhension par aspiration (10) selon l'une des revendications 1 ou 2, dans lequel la structure de vérification (24) est disposée de telle sorte que, lorsqu'un degré d'usure prédéfini du corps d'aspiration (12) est atteint, en particulier lorsqu'une quantité d'abrasion prédéfinie est dépassée, une autre zone de sortie de lumière (52) est dégagée le long d'un trajet optique allant de la zone d'entrée de lumière (28) à la zone de sortie de lumière (30).

4. Dispositif de préhension par aspiration (10) selon l'une des revendications précédentes, dans lequel la zone d'entrée de lumière (28) et la zone de sortie de lumière (30) débouchent sur le même côté du corps d'aspiration (12).

5. Dispositif de préhension par aspiration (10) selon l'une des revendications 3 ou 4, dans lequel le corps d'aspiration (12) présente un côté d'aspiration (49) pour l'aspiration de l'objet et un côté de raccordement (50) en particulier opposé pour le raccordement à une alimentation en dépression, dans lequel la zone d'entrée de lumière (28) et la zone de sortie de lumière (30) de la structure de vérification (24) débouchent dans le côté de raccordement (50).

6. Dispositif de préhension par aspiration (10) selon l'une des revendications précédentes, dans lequel le dispositif de détection (44) et/ou la source de lumière (46) sont fixés au corps d'aspiration (12).

7. Dispositif de préhension par aspiration (10) selon l'une des revendications précédentes, dans lequel le dispositif de surveillance d'usure (22) comprend en outre un dispositif d'évaluation (56) coopérant avec le dispositif de détection (44) et configuré pour générer, en fonction d'un signal optique détecté par le dispositif de détection (44), un signal d'usure qui représente l'état d'usure du corps d'aspiration (12).
